# EUROPEAN PATENT APPLICATION

(11) **EP 1 908 513 A1**
(43) Date of publication of application: **09.04.2008**
(21) Application number: 06020794.1
(22) Date of filing: 04.10.2006
(51) Int. Cl.: B01J 19/00, C07B 61/00, C40B 40/00, C40B 40/04, C40B 40/10, C40B 50/18, G01N 1/40

(54) **Method for preparing and using chemical collections**

(71) Applicant: UNIVERSITA' DEGLI STUDI DI MILANO, 20122 Milano (IT)
(72) Inventor: Rizzo, Vincenzo, 20020 Arese (Milano) (IT); Scolastico, Carlo, 19032 Lerici (La Spezia) (IT)
(74) Representative: Banfi, Paolo

(57) **Abstract**

The invention provides a method for the storage, distribution and set up of chemical collections or libraries of compounds to be used in biochemical screening techniques or assays especially in the pharmaceutical and agrochemical industries. The method comprises the steps of solubilizing the compounds in polyethylene glycol - water mixtures and the drying of the solutions to obtain solid cakes that can be stored, distributed or dissolved by addition of water or water buffered solutions.

## Description

### Field of the invention

The invention relates to compound management in the exploitation of chemical collections or libraries. More specifically, the invention provides a method for the storage, distribution and setup of chemical collections or libraries of compounds to be used in biochemical screening techniques or assays especially in the pharmaceutical and agrochemical industries. The method comprises the steps of solubilizing the compounds in polyethylene glycol - water mixtures and the drying of the solutions to obtain solid cakes that can be stored, distributed or dissolved by addition of water or water buffered solutions.

### Background of the invention

Large collections of various chemical compounds (also named chemical libraries) form the basis of modem biochemical screenings for the identification of active structural moieties with respect to a given target (a protein, or another biological macromolecule). Such screenings are also used for the definition of structure-activity relationship, where chemical libraries specifically designed for the target (also known as focused libraries) may be used. Chemical collections are usually stored either in the dry powder format or as stock solutions in a suitable solvent (most often dimethylsulfoxide, DMSO). Storage in dry powder format enhances the stability of chemical compounds, but requires weighing for the preparation of solutions with known concentration. This step is slow, difficult to automate for the preparation of small quantities of solutions, and constitutes a bottleneck in the process. Storage as DMSO stock solutions facilitates distribution through liquid handling, but poses problems of stability and is generally coupled with storage at low temperature, where DMSO freezes, and inert atmosphere conditions. However, as a consequence of DMSO hygroscopicity, solutions tend to take up water in the cycles of freeze-and-thaw as required for compound distribution. This water further decreases compound stability as well as solubility of the less hydrophilic compounds, which often precipitate. Finally, DMSO is not compatible with the activity or stability of many enzymes/proteins, and stock solutions have to be diluted in buffer (generally 50-100 fold) for an effective use in screening tests. Thus, stock solutions must be prepared at a concentration (1-10 mM) which is typically 100-fold higher than that used in screening tests (10-50 µM). Therefore, the amount of compound which is lost in dead volumes during distribution of the stock solutions is correspondingly high. Moreover, upon dilution of DMSO stock solutions, lipophilic compounds sometimes precipitate in aqueous solution and this effect generates considerable nuisance and artefacts in the interpretation of high throughput screening results.

Polyethylene glycol, a non-toxic hydrophilic polymer, has many applications in biochemistry because of its compatibility with native protein structures [see, for instance: O. Annunziata et al. "Effect of polyethylene glycol on the liquid-liquid phase transition in aqueous protein solutions" Proc.Natl.Acad.Sci. USA (2002) 99, pp. 14165-14170]. This polymer is soluble in water, where it acts as a cosolvent and helps at solubilizing lipophilic compounds. Above an average molecular weight of 600, polyethylene glycol is solid at ordinary room temperature and its aqueous solutions may be freeze-dried to produce solid cakes, which are then easily redissolved in water. Mixtures of liquid PEG and solid PEG may also be used to the same purpose: K. Amin et al. have reported that mixtures composed of 20% PEG-400, which is a liquid at ordinary room temperature, and 5% PEG-8000 produce solid cakes upon freeze-drying [K. Amin et al. "Lyophilization of polyethylene glycol mixtures" J.Pharm.Sci. (2004) 93, 2244-2249].

With an appropriate investigation, we found that compounds which are barely water soluble at the ordinary screening concentrations (10-30 µM) are soluble at about 10-fold higher concentration (100-300 µM) in PEG-water mixtures. These solutions can be distributed with a liquid handler, evaporated or freeze-dried to a solid, which can be stored safely and then reconstituted with water or aqueous buffer just before its use. Final dilution to the desired concentration leads to minimal loss of compound and the solution can be used in usual screening assays, because the residual PEG concentration is fully compatible with proteins in the native and active state. Since the storage concentration is lower than that used for DMSO stock solutions, the material loss due to dead volumes is comparably reduced.

### Summary of the invention

The present invention provides a method for the preparation, in a form suitable for storage, distribution or dissolution, of a chemical collection or library of compounds to be used in screening assays, which essentially comprises the steps of:
(a) providing the compounds in form of powder or concentrated stock solution;
(b) dissolving a pre-determined amount of each compound in a water-polyethylene glycol (PEG) mixture, to obtain a solution;
(c) drying the solution of step (b), to obtain a solid cake;
   and, optionally,
(d) adding water or an aqueous buffered solution to the solid cake.

By using a polyethylene glycol - water mixture as solvent, compounds which are barely water soluble at the common assay concentration can be dissolved at a concentration which is at least tenfold higher. These solutions are distributed into appropriate containers such as tubes, vials, multi-well microtiter plates, so that the amount in each container is sufficient for one or a few assays. Most of the water is then evaporated or removed with freeze-drying and the samples can be stored in such a dry state, with improved stability properties with respect to the common practice of using frozen DMSO solutions. Just before testing, solutions are reconstituted with the addition of a predetermined volume of water or buffer, and finally brought to the desired assay concentration through dilution.

In further embodiments the invention provides a chemical collection or library of compounds obtainable by the above method and the use thereof for the setup of a biochemical screening technique or assay.

### Detailed description of preferred embodiments

In the method of the present invention, solubilization of hydrophilic and particularly lipophilic compounds is obtained with a water - polyethylene glycol mixture. For the solubilization, either weighed powders or concentrated stock solutions in an organic solvent such as dimethylsulfoxide or dimethylformamide can be used; preferably the content of this solvent in the aqueous PEG solution does not exceed 5%. A large fraction of this organic solvent is removed during the lyophilization process, and thus the reconstituted solutions will contain much less organic solvent than this upper limit. Moreover, the organic solvent content in the assay conditions is further reduced by dilution to the assay concentration.

The polyethylene glycol content of the water - polyethylene glycol mixture may vary from 5% (w/w) for chemical collections containing only hydrophilic molecules, up to 60% (w/w) for collections of strongly lipophilic molecules. The molar concentration of each compound (between 100 µM and 1 mM) should be kept at least 10-fold higher than that used in the assay conditions. Therefore the final PEG concentration in the assay condition is generally between 0.5% and 6%, which is compatible with the activity of most proteins. Polyethylene glycol of well defined average molecular weight or mixtures of different average molecular weights (between 200 and 40,000) may be used, as long as at least one component is solid at room temperature and the mixture leads to a solid cake upon evaporation or lyophilization. The solutions in PEG-water may be distributed into several containers, so that each single aliquot contains the amount necessary for one or a few single assays. To this purpose an automated liquid handler can be used with one or more channels, or a manually operated micropipette.

Evaporation can be obtained with an evaporative centrifuge or under a gentle flow of a gas such as dry air or nitrogen. Freeze-drying (lyophilization) can be carried out according to well known laboratory procedures, which include a freezing phase by means of a cooling agent (e.g. dry ice, liquid nitrogen) or with the help of a refrigerating device, followed by removal of water under reduced pressure.

The containers can be glass tubes, plastic tubes, vials, multi-well microtiter plates. After evaporation or lyophilization, the containers are closed, under inert atmosphere if required, and these evaporated or lyophilized samples may be stored at room temperature or in refrigerated conditions. To reconstitute the solutions, a predefined volume of water or buffer is added to each container or microtiter plate well either manually or with the help of an automated liquid handler, and mild shaking may be applied to speed up the process and to obtain a homogeneous solution. If required, reconstituted solutions are then diluted by pipetting an appropriate volume directly into the assay vessel or at an intermediate concentration in an appropriate container.

The following examples illustrate the invention in more detail.

### Example 1

### Solubilization in a PEG-water mixture of a series of compounds with different water solubility, preparation of freeze-dried samples and subsequent reconstitution of aqueous solutions

Materials and methods. The following compounds were obtained from Sigma-Aldrich: ethyl-p-hydroxybenzoate, naproxen, ibuprofen, warfarin, estradiol. The following compounds were obtained from Fluka - Riedel deHaën: phenylacetic acid, p-toluenesulphonamide, carbazol (Vetranal analytical standard), Polyethylene glycol 8000. Stock solutions were prepared in dimethylsulfoxide (Sigma-Aldrich, ACS spectrophotometric grade) at 10 mM concentration by weighing an appropriate amount of each compound and adding the computed DMSO volume with a calibrated variable volume pipet (Eppendorf). A solution of PEG-8000 (30%, w/w) in water in a 50 mL centrifuge tube was prepared by weighing 15.0 g of PEG-8000 and adding water up to 50.0 g.

Solutions were analysed using an Agilent 1100 chromatograph with the following HPLC method:
Column: Waters X-terra 4.6x50 mm, 3.5 µm
Mobile phase A: water/acetonitrile (97/3 by volume) containing 0.1% trifluoroacetic acid
Mobile phase B: acetonitrile containing 0.1% trifluoroacetic acid
Flow = 1 mL/min, injection = 10 µL, detection wavelength 220 nm (8 nm bandwidth) with reference at 400 nm (40 nm bandwidth).
Gradient 1: from 100% A to 60% A in 6 min, down to 40% A in 1 min, followed by 3 min re-equilibration at 100% A.
Gradient 2: from 70% A to 30% A in 6 min, 1 min isocratic elution at 30% A, followed by 3 min re-equilibration at 70% A.

Results. A series of 8 compounds with different water solubility was selected to test the process of the present invention. The compounds are listed in Table 1, together with values of logSw (the decimal logarithm of the molar solubility in water, as obtained from literature, see Table 1). For each compound, linearity of the HPLC method was demonstrated in the range from 10 to 300 µM with the analysis of solutions prepared by dilution of the stock solutions into water/acetonitrile (4/1, v/v) for compounds **1-3** and into water/acetonitrile (1/1, v/v) for compounds **4-8.**

The following solutions were prepared by 50-fold dilution of the DMSO stock solutions:
- Target concentration: 200 µM in water
- Target concentration: 200 µM in 30% PEG-8000 / water

After equilibration (1 day at room temperature), all solutions were filtered through 0.45 µm cellulose filters (ProFill, 25 mm syringe filters, Alltech). Aliquots were placed in HPLC vials and submitted to analysis. Two 1 mL aliquots of each 30% PEG solution were placed into 14x100 mm pre-weighed test tubes. These tubes were weighed, and placed in liquid nitrogen to freeze the solution, and finally submitted to freeze-drying in a Lio-5P apparatus (5Pascal, Trezzano sul Naviglio, Italy). After one day, the tubes were weighed and water was added with a micropipette in order to match the original solution weight. A fraction of these solutions was diluted 1:10 with water (target concentration: 20 µM). All of these solutions were then analysed with HPLC and the results are reported in Table 2.

The experimental value of the concentration in water agrees with the target value for compounds 1-3, and gradually decreases for the other five compounds, following the ranking found in literature. In the PEG / water mixture, the target concentration value is maintained within 5% for all investigated compounds, including the least water soluble ones, and within 10% also for the corresponding reconstituted solutions. Notably, for compounds 7 and 8, ten-fold dilution of the reconstituted PEG lyophilized samples produces solutions with a measured concentration of 19.0 - 19.4 µM in presence of only 3% PEG-8000, although for the same compounds dilution of a DMSO stock solution in water produces a saturated solution with measured concentration of 8.4 and 8.6 µM respectively.

**Table 1. Properties of the test compounds**

| Compound | | LogSw⁺ | HPLC gradient | Retention time (min) | r^{2‡} |
|---|---|---|---|---|---|
| Nr | Name | | | | |
| **1** | Phenylacetic acid | -0.89 | 1 | 4.5 | 0.9999 |
| **2** | p-Toluenesulphonamide | -1.74 | 1 | 3.8 | 0.9991 |
| **3** | Ethyl-p-hydroxybenzoate | -2.35 | 1 | 6.4 | 0.9999 |
| **4** | Ibuprofen | -3.76 | 2 | 4.5 | 0.9996 |
| **5** | Naproxen | -4.2 | 2 | 3.3 | 0.9997 |
| **6** | Warfarin | -4.26 | 2 | 3.9 | 0.9999 |
| **7** | Estradiol | -5.03 | 2 | 3.7 | 0.9999 |
| **8** | Carbazol | -5.27 | 2 | 4.7 | 0.9997 |

| | | | | | |
|---|---|---|---|---|---|
| +) Decimal logarithm of the molar aqueous solubility as reported by: G.Yang, Y.Ran, S.H.Yalkowsky "Prediction of the aqueous solubility: Comparison of the general solubility equation and the method using an amended solvation energy relationship" J.Pharm.Sci. 2001, 91, 517-533. ‡ ) Regression coefficient for a weighted linear regression through the data (y=a + bx, weights = 1/(y)²) | | | | | |

**Table 2. Experimental concentration [µM] of solutions prepared to simulate the process of the present invention**

| Compound Nr. | C_{w}^{‡} | C_{PEG} | PEG solutions, freeze dried and reconstituted | | PEG solutions, reconstituted and diluted 1:10 | |
|---|---|---|---|---|---|---|
| | | | Test 1 | Test 2 | Test 1 | Test 2 |
| **1** | 200 | 198 | 181 | 187 | 17.7 | 17.8 |
| **2** | 196 | 195 | 197 | 198 | 19.6 | 19.8 |
| **3** | 193 | 190 | 190 | 193 | 18.6 | 19.3 |
| **4** | 187 | 200 | 189 | 184 | 18.5 | 18.6 |
| **5** | 131 | 200 | 201 | 201 | 20.2 | 22.9 |
| **6** | 155 | 198 | 199 | 199 | 20.2 | 20.4 |
| **7** | 8.4 | 194 | 194 | 195 | 19.3 | 19.4 |
| **8** | 8.6 | 196 | 195 | 195 | 19.0 | 19.2 |

| | | | | | | |
|---|---|---|---|---|---|---|
| ‡) Concentration of an aqueous solution obtained upon 50-fold dilution of a 10 mM solution in DMSO, followed by filtration through a 0.45 µm cellulose filter. | | | | | | |

### Example 2

### Solubilization of two lipophilic compounds (estradiol and carbazol) in PEG-8000, PEG-20000, and PEG-400/PEG-8000 water mixtures. Preparation of freeze-dried samples and subsequent reconstitution of aqueous solutions

Materials and methods. Estradiol was a Sigma-Aldrich product. The following compounds were obtained from Fluka - Riedel deHaën: carbazol (Vetranal analytical standard), Polyethylene glycol 8000, Polyethylene glycol 20000, Polyethylene glycol 400. Stock solutions of carbazol or estradiol were prepared in dimethylsulfoxide (Sigma-Aldrich, ACS spectrophotometric grade) at 10 mM concentration by weighing an appropriate amount of each compound and adding the computed DMSO volume with a calibrated variable volume pipet (Eppendorf). Solutions of PEG-8000 and PEG-20000 in water (30%, w/w) were prepared in 50 mL centrifuge tubes by weighing 15.0 g of the corresponding PEG and adding water up to 50.0 g. A solution containing PEG-8000 (10%, w/w) and PEG-400 (20%, w/w) was similarly prepared by mixing 5 g PEG-8000 with 10 g of PEG-8000, and adding water up to 50 g.

Solutions were analysed by HPLC with the method using gradient 2, as described in example 1, with a standard prepared in water/acetonitrile (1/1 v/v) at a concentration of 200 µM.

Results. The two most lipophilic (the least water soluble) compounds of example 1, were selected to test the influence of PEG molecular weight on the recovery of the reconstitution process. Starting from DMSO stock solutions, dilute solutions with a nominal concentration of 200 µM were prepared by 50-fold dilution with one of three different aqueous PEG medium. After equilibration for 1 day at room temperature, these solutions were filtered through 0.45 µm cellulose filters (ProFill, 25 mm syringe filters, Alltech). Aliquots were placed in HPLC vials and submitted to analysis. Results (average of three different experiments) are collected in Table 3. In good agreement with results of experiment 1, the concentration of both compounds agrees well with the target value (better than 5%) in the 30% PEG-8000 / water mixture; for the other mixtures the deviation is appreciable but still within a 10% range.

Two 0.5 mL aliquots of each water/PEG solution were placed into 14x100 mm pre-weighed test tubes. These tubes were weighed, and placed either in liquid nitrogen or in dry ice to freeze the solution, and finally submitted to freeze-drying in a Lio-5P apparatus (5Pascal, Trezzano sul Naviglio, Italy). After one day, the tubes were weighed and water was added with a micropipette in order to match the original solution weight. The clear solutions were placed into HPLC vials and analysed with the above method. A typical chromatogram is reported in Figure. The experiment was repeated several times and the averaged results are reported in Table 4. Values of recovery, defined as the ratio between the experimental (HPLC) concentration and the expected one (200 µM), are well above 90% and approach 100% in the case of PEG-8000 solutions.

**Table 3. Solubility of estradiol and carbazol in various aqueous PEG media**

| | | 20% PEG-400 + 10% PEG-8000 | 30% PEG-8000 | 30% PEG-20000 |
|---|---|---|---|---|
| Estradiol | Average solubility [µM] | 197.1 | 199.4 | 188.0 |
| | SD | 0.8 | 3.2 | 8.1 |
| | N | 3 | 3 | 3 |
| Carbazol | Average solubility [µM] | 187.1 | 193.5 | 187.6 |
| | SD | 6.7 | 2.8 | 4.4 |
| | N | 3 | 3 | 3 |

| | | | | |
|---|---|---|---|---|
| SD = standard deviation [µM] N = number of experiments | | | | |

**Table 4. Recovery of estradiol and carbazol after freeze-drying and reconstitution with water from various aqueous PEG media**

| | | 20% PEG-400 + 10% PEG-8000 | 30% PEG-8000 | 30% PEG-20000 |
|---|---|---|---|---|
| Estradiol | Average Recovery % | 96.0% | 101.0% | 96.8% |
| | RSD | 3.5% | 2.0% | 2.9% |
| | N | 4 | 4 | 4 |
| Carbazol | Average Recovery % | 94.8% | 97.6% | 92.1% |
| | RSD | 1.3% | 1.9% | 1.1% |
| | N | 4 | 4 | 3 |

| | | | | |
|---|---|---|---|---|
| Recovery % = 100 · experimental concentration / expected concentration RSD = relative standard deviation N = number of experiments | | | | |

**Figure.** HPLC chromatograms of the following estradiol solutions: 1) a reference 200 µM solution in water/acetonitrile (1/1 by volume) as prepared by 50-fold dilution of a 10 mM solution of estradiol in DMSO; 2) a reconstituted solution of estradiol in 30% PEG-8000 / water. This latter solution was prepared as described in example 2, at a target estradiol concentration of 200 µM.

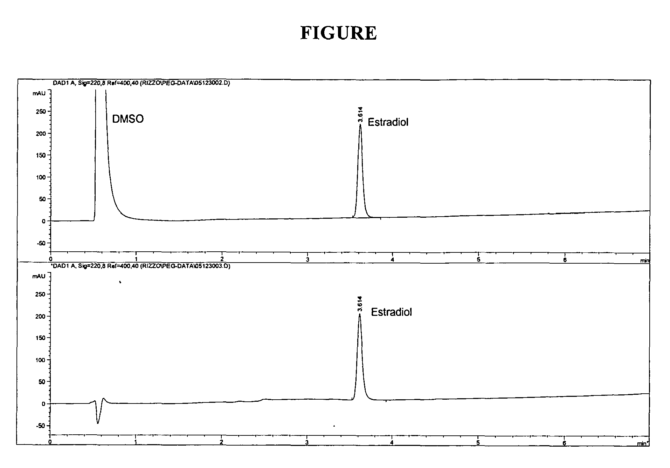

## Claims

1. A method for the preparation, in a form suitable for storage, distribution or dissolution, of a chemical collection or library of compounds to be used in a biochemical screening technique or assay, which essentially comprises the steps of:
(a) providing the compounds in form of powder or concentrated stock solution;
(b) dissolving a pre-determined amount of each compound in a water-polyethylene glycol (PEG) mixture, to obtain a solution;
(c) drying the solution of step (b) to obtain a solid product.

2. A method according to claim 1, further comprising the step (d) of adding water or an aqueous buffered solution to the solid product of step (c).

3. A method according to claim 1 or 2, wherein the concentrated stock solution of step (a) contains an organic solvent.

4. A method according to claim 3, wherein the organic solvent is dimethylsulfoxide or dimethylformamide.

5. A method according to claim 1 or 2, wherein the solution prepared according to step (b) contains from 100 µM to 1 mM of said compound.

6. A method according to claim 1 or 2, wherein the water-PEG mixture used in step (b) contains from 5% wt to 60% wt PEG.

7. A method according to claim 6, wherein said PEG is a mixture of PEGs with different average molecular weight, provided that at least one PEG is solid at room temperature (20-25°C).

8. A method according to claim 7, wherein said average molecular weight ranges from 200 to 40,000.

9. A method according to claim 1 or 2, wherein step (b) is carried out in a container which is a glass tube, a plastic tube, a vial or a multi-well microtiter plate.

10. A method according to claim 1 or 2, wherein step (c) is carried out by evaporating or freeze-drying the solution of step (b).

11. A method according to claim 10, wherein evaporation is obtained with an evaporative centrifuge or under flow of a gas which is preferably air or nitrogen.

12. A method according to claim 10, wherein freeze-drying includes a freezing phase in a cooling apparatus or by means of a cooling agent, which is preferably dry ice or liquid nitrogen.

13. A method according to claim 12, wherein said freezing phase is followed by removal of water under reduced pressure.

14. A method according to claim 1 or 2, wherein the solid product obtained in step (c) is stored at room temperature or in refrigerated conditions.

15. A method according to claim 2, wherein the addition of water or of an aqueous buffered solution to the solid product is carried out with simultaneous shaking or sonication to obtain a homogeneous solution.

16. A method according to claim 1 or 2, wherein the compounds are lipophilic.

17. A method according to claim 1 or 2, wherein the biochemical screening techniques or assays are in a low, medium or high-throughput format.

18. A method according to claim 17, wherein said screening techniques or assays are run in an automatic apparatus.

19. The use of polyethylene glycol (PEG) for the storage of compounds in a chemical collection or library.

20. The use according to claim 19, wherein said PEG is a mixture of PEGs with different average molecular weight, provided that at least one PEG is solid at room temperature (20-25°C).

21. The use according to claim 20, wherein said average molecular weight ranges from 200 to 40,000.

22. A chemical collection or library of compounds for use in biochemical screening techniques or assays, wherein each compound is included in a solid PEG mixture.

23. A chemical collection or library of compounds according to claim 22, wherein said PEG mixture comprises different average molecular weight PEGs.

24. A chemical collection or library of compounds according to claim 23, wherein said average molecular weight ranges from 200 to 40,000.

25. A chemical collection or library of compounds according to claims 22-24, which is obtainable by the method of any one of claims 1-18.

26. The use of a chemical collection or library of compounds according to claims 22-25, for the setup of a biochemical screening technique or assay.
